# EUROPÄISCHE PATENTSCHRIFT

(11) **EP 1 388 442 B1**
(45) Veröffentlichungstag und Bekanntmachung des Hinweises auf die Patenterteilung: **02.11.2006**
(21) Anmeldenummer: 03018105.1
(22) Anmeldetag: 08.08.2003
(51) Int. Cl.: B60G 17/052, B60G 15/12, B60G 11/27, B60G 11/30, F16F 9/06, B60G 17/04

(54) **Pneumatische Federung und Höhenverstellung für Fahrzeuge**
Pneumatic suspension and height adjustment for vehicles
Suspension et réglage en hauteur pneumatique pour véhicule

(30) Priorität: 09.08.2002 DE 10236660; 09.08.2002 DE 10236662
(43) Veröffentlichungstag der Anmeldung: 11.02.2004
(73) Patentinhaber: Kerler, Johann, jun., 87745 Eppishausen/Aspach (DE)
(72) Erfinder: Kerler, Johann, jun., 87745 Eppishausen/Aspach (DE)
(74) Vertreter: Pfister, Stefan Helmut Ulrich

(56) Entgegenhaltungen:
- DE-A- 3 712 886
- US-A- 4 478 431
- US-A- 5 364 081
- US-A- 5 547 211

## Beschreibung

Die Erfindung betrifft eine Radlageanordnung für Fahrzeuge, bestehend aus einem doppelwirkenden Pneumatikzylinder, welcher zwischen Rad und dem Fahrzeugaufbau anordenbar ist. Eine solche gattungsgemäße Anordnung ist aus der DE 3712886 A bekannt.

Als Radlageanordnung werden hierbei insbesondere Federn oder auch Höhenverstellungen in Fahrwerken angesehen. Sowohl Federanordnungen, beispielsweise Stoß- oder Schwingungsdämpfer, sowie auch die Höhenverstellung bewirken eine Änderung der Lage des Rades an einem Fahrzeug. Die Höhenverstellung wird dabei eingesetzt, um das Fahrzeug höher oder tiefer zu setzen, also den Abstand des Fahrzeugaufbaus zum Untergrund über einen längeren Zeitraum zu verändern. Hingegen dienen Federanordnungen für eine kontinuierliche Anpassung der Radlage an die Fahrbahnoberfläche, wie sie z.B. in einem normalen Fahrbetrieb hinlänglich bekannt ist. Dabei betrifft die Erfindung eine Radlageanordnung, die entweder nur eine Federfunktion oder nur eine Höhenverstellfunktion aufweist wie auch eine Kombination der Funktionen Feder und Höhenverstellung.

Aus dem Stand der Technik ist es bekannt, insbesondere Nutzkraftfahrzeuge mit Feder-Dämpfermodulen auszustatten, die aus einer Kombination zwischen einem Schwingungsdämpfer und einer Luftfeder bestehen. Der Nachteil dieser Anordnung ist dabei, daß die Luftfedern aufgrund ihrer Bauart einen recht hohen Platzbedarf im Fahrzeug benötigen, so daß sie beispielsweise in Personenkraftwagen noch nicht eingesetzt werden. Die bekannten Gas-Schwingungsdämpfer sind durch einen recht komplizierten Aufbau gekennzeichnet, wobei z.B. Gasdruck-Zweirohr-Dämpfer mit hohler Kolbenstange beispielsweise eingesetzt werden. Es ist weiterhin bekannt, die Schwingungsdämpfer und Schwingungsfeder nebeneinander an der Achse anzubringen, was wiederum zu einem sehr hohen Platzbedarf führt, der beispielsweise in Personenkraftwagen nicht vorhanden ist.

Das Anordnen von Dämpfer und Luftfeder übereinander ist beispielsweise dadurch erschwert, daß auch hier durch die Ausbildung der Luftfeder als auf dem Dämpfer aufgesetzten Gummibalg wiederum eine sehr große Bauart darstellt, die in Personenkraftwagen beispielsweise nicht einsetzbar ist, da die notwendigen Bauhöhen nicht zur Verfügung stehen. Im weiteren ist durch die Abdichtungserfordernisse der einzelnen Baugruppen untereinander ebenfalls ein erhöhter Material- und Bearbeitungsaufwand bei der Herstellung notwendig.

Insbesondere führt die nach dem bekannten Stand der Technik notwendige Trennung der Druckkörper von Luftfeder, welcher als Balg beispielsweise ausgeführt ist, und des Schwingungsdämpfers in Form eines Gasdruckzweirohrdämpfers mit hohler Kolbenstange auch technisch dazu, daß die Anschlüsse zu den Druckbehältern bzw. Kompressoren getrennt und damit doppelt ausgeführt werden müssen und mit unterschiedlichem Drücken ebenfalls beaufschlagbar ausgestaltet sind. Dies ist ebenfalls ein erhöhter Aufwand, der sich beispielsweise in der Fertigung von Radlageanordnungen, insbesondere im Personenkraftfahrzeugbau noch nicht durchgesetzt hat.

Ausgehend von dem zuvor beschriebenen Stand der Technik ist es Aufgabe der Erfindung, eine neuartige Radlageanordnung für Fahrzeuge zu schaffen, die möglichst flexibel, also für unterschiedliche Einsatzbereiche einsetzbar ist.

Die Erfindung geht von dem zuvor beschriebenen Stand der Technik aus und schlägt zur Lösung der gestellten Aufgabe eine Radlageanordnung für Fahrzeuge vor, bestehend aus einem doppelwirkenden Pneumatikzylinder, welcher zwischen Rad- und Fahrzeugaufbau anordenbar ist und der Pneumatikzylinder einen an der Kolbenstange geführten, bewegbaren Kolben besitzt, welcher das Zylindervolumen in zwei Druckkammern unterteilt, wobei zumindest eine Druckkammer eine Luftdurchlaßöffnung aufweist, durch die die Druckkammer mit einem Ausgleichsbehälter und/oder Druckvorrat verbindbar ist. Als Radlageanordnung nach der Erfindung sind alle Baugruppen bzw. Fahrzeugteile zu verstehen, die sowohl der Federung bzw. der Beeinflussung der Federeigenschaften als auch der Höhenverstellung der Fahrzeugkarosserie gegenüber der Fahrbahn bzw. des relativen Abstandes der Räder des Fahrzeuges zu der Karosserie dienen. Dabei ist eine Einzelradaufhängung ebenso mittels der Erfindung realisierbar wie eine Beeinflussung jeweils bezogen auf eine oder mehrere Achsen.

Ein wesentlicher Vorteil der Erfindung liegt darin, daß der erfindungsgemäß vorgeschlagene Einsatz eines Pneumatikzylinders sowohl für eine Radlageanordnung als Federbein wie auch eine Radlageanordnung, welche als Höhenverstellung dient, einsetzbar ist. Das Konzept ist daher für verschiedene Varianten einsetzbar und äußerst flexibel.

Die Verbindung des Pneumatikzylinders mit einem Ausgleichsbehälter führt dazu, daß die mit der Fahrzeugbewegung beaufschlagte Kolbenseite versucht, Volumen aus dem Pneumatikzylinder wegzudrücken, welches durch die Verbindungsleitung zum Ausgleichsbehälter auch erfolgt. Dabei wirkt die Verbindungsleitung als Drossel und die gesamte Anordnung von Druckkammer, Verbindungsleitung und Ausgleichsbehälter als gedämpftes, schwingendes System. Dies führt letztendlich dazu, daß durch eine entsprechende Dimensionierung des Ausgleichsbehälters der Druckkammer und der Leitung Federeigenschaften einstellbar sind.

Gleichzeitig erlaubt die erfindungsgemäße Anordnung aber auch eine Verbindung des Pneumatikzylinders mit einem Druckvorrat, wodurch sich die Stellung des Kolbens in den Pneumatikzylinder einstellen läßt und dadurch die Höhenlage des Fahrzeuges durch die erfindungsgemäße Radlageanordnung veränderbar ist.

Die Verbindung zumindest einer Druckkammer eines Pneumatikzylinders mit einem Ausgleichsbehälter führt dazu, daß man die Federcharakteristik und die Schwingungsdämpfung selbst sehr positiv mit Hilfe des zusätzlichen Druckvorrates beeinflussen kann. So reicht es beispielsweise aus, wenn eine der beiden Druckkammern mit einem konstanten Druck beaufschlagt ist und eine weitere Druckkammer mit einem variablen Druck aus dem Druckvorrat. Durch Veränderungen des Druckes im Druckvorrat kann dabei schon die Federcharakteristik bzw. Dämpfungseigenschaft des Fahrzeuges beeinflußt werden. In gleicher Weise kann durch die Beaufschlagung wenigstens einer Druckkammer des Pneumatikzylinders eine, wenn auch minimale Höhenverstellung des Fahrzeuges erreicht werden, indem beispielsweise ein Volumen des Pneumatikzylinders komprimiert wird, während das andere mit einem höheren Druck beaufschlagt wird.

Selbstverständlich ist es auch möglich, den Druck in einer der Druckkammern zu reduzieren, wodurch sich das Volumen der nicht angeschlossenen Druckkammer wieder vergrößert und wodurch beispielsweise die Höhenverstellung des Fahrzeuges auch erreichbar ist. Günstigerweise wird man gegebenenfalls beide Druckkammern mit dem Druckvorrat verbinden. Erfindungsgemäß reicht es jedoch aus, zunächst jeweils nur eine der Druckkammern eines Pneumatikzylinders mit dem Druckvorrat bzw. einem Ausgleichsbehälter zu verbinden. Selbstverständlich ist es entsprechend einer vorteilhaften Weiterbildung der Erfindung von besonderem Vorteil, wenn beide Druckkammern eines Pneumatikzylinders mit dem Ausgleichsbehälter bzw. dem Druckvorrat verbunden sind, um über die Verstellung der Drücke in beiden Druckkammern die Federcharakteristik des Fahrzeuges sowie eine Niveauregelung zu erreichen.

Dies führt erfindungsgemäß auch dazu, daß man für die Federung, die Dämpfung und für den Ausgleich des Höhenniveaus vorzugsweise lediglich einen einzigen doppelwirkenden Pneumatikzylinder je Rad bzw. Radaufhängung benötigt. Selbstverständlich ist dieser Pneumatikzylinder auch mit herkömmlichen Federdämpfern kombinierbar, wie beispielsweise mit hydraulischen und/oder hydraulisch-mechanischen Federdämpfern.

Entsprechend einer vorteilhaften Weiterbildung der erfindungsgemäßen Radlageanordnung ist es vorgesehen, daß die Radlageanordnung zur Federung des Fahrzeuges dient. Damit wird erreicht, daß durch die Anordnung von Pneumatikzylindern an den Radaufhängungen des Fahrzeuges lediglich ein Pneumatikzylinder, insbesondere ein doppelwirkender Pneumatikzylinder angeordnet werden muß, der einerseits die Federeigenschaften des Fahrzeuges bestimmt, über den sich aber auch eine gewisse Niveauregelung des Fahrzeuges durch Veränderung der Kolbenstellung erreichen läßt.

Es wurde erfindungsgemäß gefunden, daß die Medien für den Pneumatikzylinder durchaus unterschiedlich sein können. Die Federcharakteristik läßt sich dadurch ebenfalls beeinflussen. So sind als Druckmedien beispielsweise Luft, Stickstoff, Kohlendioxyd, Edelgase, vorzugsweise Helium, vorgesehen.

Die erfindungsgemäße Radlageanordnung zeichnet sich entsprechend einer Weiterbildung auch dadurch aus, daß die Verbindungsleitung zwischen der Druckkammer und dem Ausgleichsbehälter als Drossel wirkt. Dies ist eine weitere Möglichkeit, um die Radlageanordnung an dem Fahrzeug selbst zu verändern, aber insbesondere auch, um die Federeigenschaften des Systems insgesamt positiv zu beeinflussen. Beispielsweise wird durch die Schaltung einer Drossel in Form der Verbindungsleitungen der Druckausgleich verzögert, was auch zur Verzögerung der eigentlichen Bewegung des Kolbens des Zylinders und damit der Radaufhängung insgesamt führt. Somit kann man hierdurch bewirken, daß die Federung entweder härter oder weicher eingestellt ist. Selbstverständlich ist es auch gegeben, daß man veränderbare Drosseln als Baugruppen in die Verbindungsleitungen zwischen der Druckkammer und dem Ausgleichsbehälter schaltet. Natürlich ist es möglich, daß in der Leitung eine eigenständige (gegebenenfalls einstellbare) Drossel zusätzlich vorgesehen ist.

Von Vorteil ist es auch, wenn zumindest eine der Druckkammern direkt mit dem Druckvorrat verbunden ist. Dadurch wird der jeweils in dem Druckvorrat vorhandene Druck beispielsweise ohne größere Verzögerungen zumindest in eine der Druckkammern übertragen, was bei bestimmten Feder- bzw. Einstellungsoptionen durchaus als vorteilhaft anzusehen ist. Dies hängt natürlich immer von dem jeweiligen Anwendungsfall ab und ist universell auch in anderen bereits beschriebenen oder auch anderen noch folgenden Lösungen nach der Erfindung frei kombinierbar.

Von Vorteil ist es weiterhin, wenn zumindest eine der Druckkammern über jeweils getrennte Leitungen oder über eine zumindest abschnittsweise gemeinsame Leitung mit dem Ausgleichsbehälter und dem Druckvorrat verbunden ist. Wie bereits erwähnt, führt die Schaltung von Druckkammern über eine Leitung zu dem Ausgleichsbehälter und dem Druckvorrat dazu, daß die Volumina der Ausgleichsbehälter und des Druckvorrates gleichermaßen als Puffer für die Druckkammer des Pneumatikzylinders mitwirken und somit die Federeigenschaften der Radlageanordnung dadurch sehr positiv beeinflußbar bzw. flexibel steuerbar sind.

Ein weiterer Aspekt der Erfindung ist dadurch angegeben, daß ein Ausgleichsbehälter für mehrere Druckkammern, insbesondere für gleichartige in dem Pneumatikzylinder angeordnete Druckkammern, vorgesehen ist oder jeder Druckkammer ein eigener Ausgleichsbehälter zugeordnet ist, wobei vorzugsweise mehrere Ausgleichsbehälter untereinander durch Leitungen verbindbar sind. Zum Beispiel ist der Pneumatikzylinder der Radlageanordnung am Rad vertikal orientiert verbaut. Der Kolben unterteilt dabei den Zylinder in eine obere und eine untere Druckkammer. Gemäß der erfindungsgemäßen Weiterentwicklung werden nunmehr z.B. die jeweils oberen Druckkammern bzw. die jeweils unteren Druckkammern mit einem gemeinsamen Ausgleichsbehälter verbunden. Dies stellt ebenfalls eine sehr vorteilhafte Variante der erfindungsgemäßen Lösung dar, wobei unterschiedliche Kombinationen von Druckkammer und Ausgleichsbehälter über die Druckleitungen gewählt werden, um bestimmte Eigenschaften der Radlageanordnung zu bestimmen, insbesondere da die gleichartigen Druckkammern in der Regel gleichartig im Fahrbetrieb belastet werden. Dies kann sich jeweils sowohl nach der Niveau- bzw. Lageveränderung als auch nach den Federeigenschaften richten.

Es ist auch günstig, wenn in einer weiteren Ausbildung der Erfindung eine Feder vorgesehen ist, die die Federung des Pneumatikzylinders unterstützt bzw. diese ausgleicht. Dabei kann man in gleicher Weise, wie es bei hydromechanischen Schwingungsdämpfern bereits bekannt ist, die Feder sowohl zur weiteren Dämpfung als auch zum Ausgleich der Bewegung des Kolbens im Pneumatikzylinder einsetzen.

Die erfindungsgemäße Radlageanordnung zeichnet sich auch dadurch aus, daß der Ausgleichsbehäler mit einem Druckvorrat verbunden ist und eine Drucksteuerung vorgesehen ist, mittels derer die Federcharakteristik der Radlageanordnung einstellbar ist. Über eine Drucksteuerung erreicht man insbesondere, daß man unterschiedliche Drücke für unterschiedliche Einsatzzwecke vorsieht. Unter einer Drucksteuerung nach der Erfindung ist ein System zu verstehen, das wenigstens einen Kompressor umfaßt und Druckbehälter, Verbindungsleitungen, Ventile, Zylinder, Drucksensoren sowie eine beispielsweise elektronische Steuerung mit dazugehörigen Meß- und Regeleinrichtungen beinhaltet.

Es ist beispielsweise vorgesehen, daß man, wenn das Fahrzeug in einem Gelände, welches uneben ist, bewegt werden soll, zum einen die Pneumatikzylinder so einstellen kann, daß damit die höchste Radlage erreicht wird. Zum anderen kann man dann den Druck entsprechend variieren, um auch hier noch ausreichend gute Federeigenschaften zu erreichen. Die Kombination mit einem Wegmeßsystem, beispielsweise am Kolben, kann dabei vorteilhafterweise zur Beeinflussung des Druckes auch eingesetzt werden, in dem beispielsweise bei Überschreitung von bestimmten vorher gewählten Marken für die Bewegung des Zylinders dann der Druck entsprechend erhöht bzw. gesenkt wird, um wieder in den normalen Bereich im Fahrbetrieb zu gelangen. Bei einer Fahrt auf einer ebenen Straße wird man den Pneumatikzylinder so einstellen, daß die niedrigste Radlage erreicht wird. Auch hierzu ist es dann notwendig, die Drücke in den einzelnen Druckkammern des Pneumatikzylinders entsprechend zu beeinflussen. Dies kann mit einer Drucksteuerung problemlos gelöst werden.

Ein weiterer Aspekt der Erfindung ist dadurch angegeben, daß der Ausgleichsbehälter mehrere Ausgleichskammern aufweist und die Ausgleichskammern derart ausgebildet sind, daß das Volumen der beiden Ausgleichskammern veränderbar ist. Dies geschieht beispielsweise durch die Anordnung eines Kolbens oder einer verstellbaren Wand in der Ausgleichskammer, der durch eine Verstellung zur Veränderung des Volumens in der Ausgleichskammer führt. Durch die Veränderung des Volumens der Ausgleichskammer ist eine weitere Möglichkeit zur positiven Beeinflussung des Schwingungsverhaltens und/oder der Schwingungsdämpfung und/oder der Höheneinstellung angegeben. Durch eine Verringerung des Volumens im Druckvorrat bzw. im Ausgleichsbehälter wird sich gegebenenfalls eine härtere Einstellung erreichen lassen. Durch die Vergrößerung des Volumens des Ausgleichsbehälters bzw. des Druckvorrates lassen sich weitere Veränderungen der Eigenschaften des Systems durchaus erfindungsgemäß einstellen.

Gemäß einer Weiterbildung der erfindungsgemäßen Lösung, wie zuvor beschrieben, ist es vorgesehen, daß die Radlageanordnung demnach als pneumatische Höhenverstellung dient, indem die Höhenverstellung durch unterschiedliche Stellung des Kolbens im Pneumatikzylinder bewirkt wird. Dieses Prinzip wurde im Zusammenwirken mit der Einstellung der Radlage selbst bzw. der Federeigenschaften bereits beschrieben, so daß hierauf nicht nochmal näher eingegangen wird.

Es ist auch günstig, wenn der Pneumatikzylinder derart ausgebildet ist, daß er an einen hydraulisch-mechanischen Schwingungsdämpfer anschließbar und insbesondere auf diesen aufsetzbar ausgebildet ist. Die Kombination zwischen Pneumatikzylinder auf der einen Seite, der sowohl schwingungsdämpfende Eigenschaften aufweist als auch gleichzeitig der Höhenverstellung dient, und einem hydraulisch-mechanischen Schwingungsdämpfer kann durchaus für die Ausbildung besonderer schwingungsdämpfender Eigenschaften bei gleichzeitiger Verstellmöglichkeit des Fahrzeughöhenniveaus eingesetzt werden. Dabei ist es selbstverständlich von Vorteil, wenn der Pneumatikzylinder so ausgebildet ist, daß er auf den hydraulisch-mechanischen Schwingungsdämpfer einfach aufgesetzt wird, so daß ein recht geringer Platzbedarf benötigt wird und eine einfache Montage bzw. Demontage gegeben ist.

Von Vorteil ist es weiterhin, wenn die Kolbenstange den Kolben mit einem weiteren Kolben verbindet, der in einem als Schwingungsdämpfer ausgebildeten Hydraulikzylinder angeordnet ist oder der Kolben des Pneumatikzylinders mit dem Gehäuse des Hydraulikzylinders verbunden ist. Dies ist eine weitere vorteilhafte Ausgestaltung der Erfindung durch Kombination einer erfindungsgemäßen Radlageanordnung bzw. eines dementsprechenden Pneumatikzylinders mit einem Hydraulikzylinder.

Von Vorteil ist es weiterhin, wenn unter dem Pneumatikzylinder eine Aufnahme vorgesehen ist, die vorzugsweise den Hydraulikzylinder trägt. Die Ausgestaltung bzw. Ausbildung einer Aufnahme führt dazu, daß auch hier ein leichter Wechsel an einem Kraftfahrzeug vorgenommen werden kann, indem eine dort üblicherweise eingesetzte Aufnahme an dem Pneumatikzylinder selbst vorgesehen wird.

Die Erfindung zeichnet sich auch dadurch aus, daß als Druckvorrat ein Windkessel und/oder ein Kompressor vorgesehen ist, wobei vorzugsweise ein bereits am Fahrzeug vorhandener Bordkompressor eingesetzt wird. Die Ausbildung eines Druckvorrates in einem Windkessel ist bekannt und insbesondere bereits im Nutzkraftfahrzeugbau beispielsweise für die Lieferung des notwendigen Druckes einer Bremsanlage durchaus üblich. In gleicher Weise läßt sich ein Windkessel auch erfindungsgemäß für die Radlageanordnung und die Beaufschlagung der einzelnen Pneumatikzylinder der Radlageanordnung selbst benutzen. Selbstverständlich ist es auch vorgesehen, den Kompressor selbst als Druckvorrat zu nutzen, indem dieser direkt mit den Pneumatikzylindern der Radlageanordnung verbunden wird. Dies hat allerdings den Nachteil, daß bei Ausfall des Kompressors recht schnell auch mit dem Ausfall der Druckluft in dem System selbst zu rechnen ist, wodurch die Federung dann auf gegebenenfalls vorhandene Ausweichmöglichkeiten umzustellen ist. Deshalb ist es bevorzugt, wenn neben dem Kompressor, vorzugsweise einem am Fahrzeug bereits vorhandenen Kompressor, ein Windkessel bzw. ein Druckvorrat oder ein Ausgleichsbehälter verwendet wird, um auch bei Ausfall des Kompressors zumindest über eine bestimmte Zeitdauer einen bestimmten Druck zu gewährleisten.

Von Vorteil ist es weiterhin, wenn an den Luftdurchlaßöffnungen der Pneumatikzylinder und/oder den Leitungen, die die Pneumatikzylinder mit dem Druckvorrat bzw. den Ausgleichsbehältern verbinden, Ventile vorgesehen sind, die die Luftzufuhr bzw. den Luftablaß regeln. Auch hierüber läßt sich die Schwingungs- und Federcharakteristik des gesamten Radlageanordnungssystems beeinflussen. Von Vorteil ist es dabei selbstverständlich, wenn die Ventile als Regelventile mit dem Anschluß an eine zentrale Steuerungs- bzw. Regelanlage ausgebildet sind.

Die Erfindung betrifft auch ein Fahrzeug, wobei zumindest die Räder bei einer Achse des Fahrzeuges mit einer Radlageanordnung nach einer oder mehreren der vorher beschriebenen Ausführungsformen der Radlageanordnung ausgestattet sind und ein Regelsystem vorgesehen ist, das den Druck und/oder die Federeigenschaften des Pneumatikzylinders regelt.

Eine vorteilhafte Weiterbildung dieses Fahrzeuges ist dadurch angegeben, daß an dem Fahrzeugaufbau eine Aufnahmeplatte vorgesehen ist, die mit dem Pneumatikzylinder zusammenwirkt. Durch die Anordnung einer Aufnahmeplatte an dem Fahrzeugaufbau und/oder an der Schwinge der Radaufhängung ist es erfindungsgemäß sehr leicht möglich, üblicherweise vorhandene hydraulisch-mechanische Schwingungsstoßdämpfer durch die erfindungsgemäßen Pneumatikzylinder bzw. die Kombination eines Pneumatikzylinders mit einem Hydraulikzylinder zu ersetzen. Es ist lediglich dafür Sorge zu tragen, daß die entsprechenden Aufnahmen an dem Pneumatikzylinder der Radlageanordnung zu der bzw. den Aufnahmeplatte(n) korrespondieren, so daß ein leichter Wechsel möglich ist.

Die Erfindung wird nachfolgend anhand von Zeichnungen und Ausführungsbeispielen näher beschrieben. Es zeigen:
- Fig. 1:: Schnitt durch einen pneumatischen Zylinder als Ausführungsform der Erfindung,
- Fig. 2a:: eine weitere Variante nach der Erfindung,
- Fig. 2b:: weitere Ausführungsform der Erfindung,
- Fig. 3:: schematische Darstellung einer Radlageanordnung nach der Erfindung,
- Fig. 4:: Ausführungsform der Erfindung mit zwei Zylindern,
- Fig. 5:: weitere Ausführungsform der Erfindung mit ebenenfalls zwei Zylindern und unterschiedlichen Druckanschlußmöglichkeiten,
- Fig. 6:: erfindungsgemäße Radlageanorndung mit weiteren Verbindungsmöglichkeiten der Zylinder mit dem Druckausgleichsbehälter und Regeleinrichtung,
- Fig. 7:: Schnitt durch einen hydro-pneumatischen Schwingungsdämpfer nach der Erfindung.

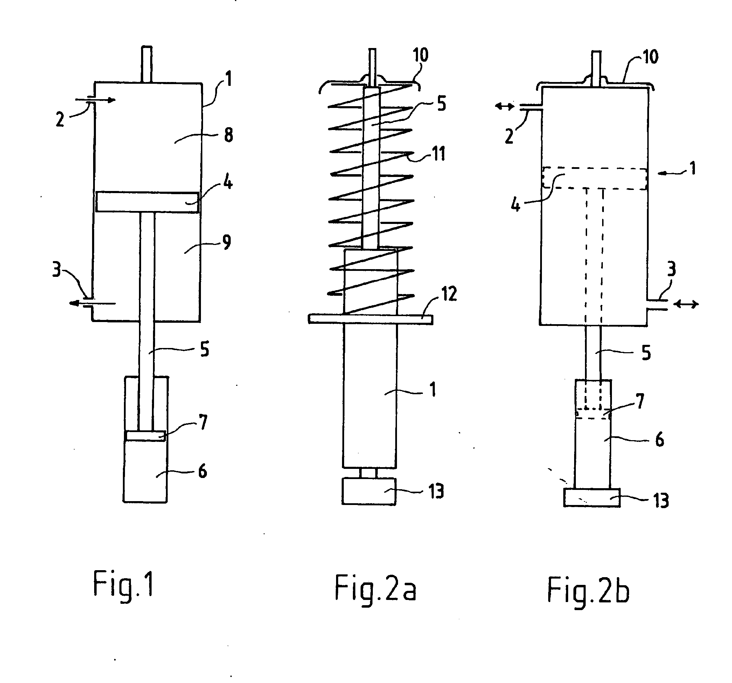

Die Fig. 1 zeigt einen Schnitt durch eine Ausführungsform der Erfindung. Dabei ist mit dem Bezugszeichen 1 ein Pneumatikzylinder bezeichnet. Anders als im Stand der Technik ist dieser Pneumatikzylinder nicht aus flexiblem Material gebildet, sondern aus Kunststoff oder Stahl, welcher nicht flexibel ausdehnbar ist. Der Pneumatikzylinder ist auch nicht als Zweirohr-dämpfer mit hohler Kolbenstange, die ebenfalls bekannt ist, ausgebildet. In dem Pneumatikzylinder 1 ist ein Kolben 4 angeordnet, der an einer Kolbenstange 5 geführt ist. Die Kolbenstange 5 ist gleichzeitig die Kolbenstange für einen weiteren Kolben 7. Dieser Kolben 7 ist der Kolben für den als hydraulischen Schwingungsdämpfer ausgebildeten Zylinder 6. Der Kolben 4 des Pneumatikzylinders 1 unterteilt den Pneumatikzylinder in zwei Druckkammern, nämlich eine erste Druckkammer 8 und eine zweite Druckkammer 9. In der dargestellten Ausführungsform sind beide Druckkammern mit Druck beaufschlagbar. Dies wird beispielsweise realisiert und ist nur schematisch dargestellt mit den Luftdurchlaßöffnungen 2 und 3. Durch Beaufschlagung der Luftdurchlaßöffnung 2 kann beispielsweise der Kolben 4 in seiner Stellung im Zylinder 1 verändert werden. Dazu ist es nicht unbedingt nötig, eine untere Luftdurchlaßöffnung 3 an der zweiten Druckkammer 9 vorzusehen. Vielmehr ist es nach der Erfindung auch vorgesehen, daß die zweite Druckkammer 9 ohne Luftein- bzw. Luftaußlaßöffnung auskommt. In diesem Fall wird bei der Beaufschlagung der ersten Druckkammer 8 die in der zweiten Druckkammer 9 befindliche Luft komprimiert. Das Federverhalten des so entstehenden kombinierten hydro-pneumatischen Schwingungsdämpfers verändert sich sowohl in der Stellung des Kolbens 4 als auch mit dem unterschiedlichen Druck, der dort beaufschlagt wird. Günstiger ist es selbstverständlich, wenn beide Druckkammern 8 und 9 mit Druck beaufschlagbar bzw. mit veränderbarem Druck beaufschlagbar sind. Hierdurch lassen sich noch wesentlich unterschiedliche Dämpfungseigenschaften hervorrufen als dies bei der zuvor beschriebenen Variante möglich ist. Selbstverständlich ist es erfindungsgemäß auch vorgesehen, ausschließlich als Pneumatikzylinder 1 ausgebildete Schwingungsdämpfer einzusetzen.

Die Fig. 2a zeigt eine weitere erfindungsgemäße Variante, welche eine obere Aufnahmeplatte 10 aufweist. Zwischen dieser Aufnahmeplatte 10 und dem Federteller 12 ist eine Feder 11 angeordnet. Dies ist z.B. bei herkömmlichen Schwingungsdämpfern Stand der Technik. Der Federteller 12 ist dabei an dem Gehäuse des Hydraulikzylinders 6 befestigt. Mit dem Bezugszeichen 13 ist eine untere Aufnahme bezeichnet, die dazu dient, den Schwingungsdämpfer insgesamt an dem Fahrzeug zu befestigen. Erfindungsgemäß wird nunmehr vorgeschlagen, die obere und untere Aufnahmeplatte 10 und 13 so auszuführen, daß problemlos ein hydro-pneumatischer oder pneumatischer Schwingungsdämpfer nach der Erfindung einsetzbar ist.

In der Fig. 2b ist angedeutet, wie ein hydro-pneumatischer Schwingungsdämpfer einen hydro-mechanischen ersetzt. Zwischen der Aufnahmeplatte 10 und der unteren Aufnahme 13 ist dabei schematisch nur dargestellt ein hydro-pneumatischer Schwingungsdämpfer, wie er nach der Erfindung vorgeschlagen wird. Im oberen Bereich ist dabei ein Pneumatikzylinder 1 angeordnet, der mit Luftdruck beaufschlagbar ist. Dadurch ist es leicht möglich, die Aushubhöhe des Zylinders beispielsweise zu verändern oder aber mittels Beaufschlagung mit unterschiedlichem Drücken sind dadurch beispielsweise die Dämpfungseigenschaften insgesamt beeinflußbar. Eine derartige Lösung wird sich selbstverständlich auch dafür einsetzen lassen, um das Fahrzeug je nach Belastung in seiner Fahrwerkshöhe zu verändern, um die günstigsten Fahreigenschaften jeweils zu erreichen. Sinnvollerweise ist eine derartige Lösung auch mit entsprechenden Steuer-und Regeleinrichtungen verbindbar, die ausgehend von dem jeweiligen Beladezustand das Niveau des Pneumatikzylinders 1 einstellen.

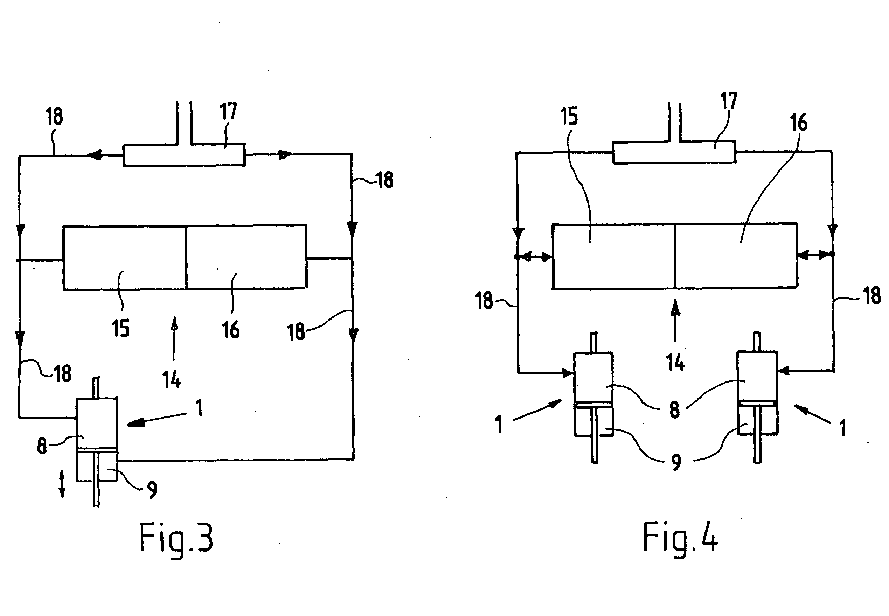

Die Fig. 3 zeigt einen Ausgleichsbehälter für eine Radlageanordnung nach der Erfindung, zum Beispiel ein pneumatisches Schwingungsdämpfersystem mit wenigstens zwei Pneumatikzylindern 1 und mit einem Druckausgleichsbehälter 14. Der Druckausgleichsbehälter 14 ist in zwei Ausgleichskammern 15 und 16 unterteilt, die ein gleiches Volumen aufweisen. Beide Ausgleichskammern sind mit dem Druckvorrat 17 bzw. dem Kompressor der Luftversorgungsanlage des Fahrzeuges verbunden. Die Verbindung wird dabei nur schematisch angedeutet mit dem Bezugszeichen 18, welches alle Druckleitungen bzw. Verbindungsleitungen bezeichnet. Die Fig. 3 beschränkt sich dabei lediglich auf den Druckausgleichsbehälter 14. Dieser Druckausgleichsbehälter bietet erfindungsgemäß die Möglichkeit, mittels des zustätzlichen Volumens in den Ausgleichskammern 15 und 16 die Federeigenschaften eines hydraulischen Federsystems eines Kraftfahrzeuges positiv zu beinflussen. Dies kann sowohl durch die Größe der Ausgleichskammern 15 und 16 als auch gleichzeitig durch die Beaufschlagung mit unterschiedlichem Drücken erfolgen. Entsprechend einer vorteilhaften Weiterbildung ist es auch vorgesehen, daß die Ausgleichskammern 15 und 16 in ihrem Volumen veränderbar sind. Dies kann beispielsweise durch in den Ausgleichskammern angeordnete verschiebliche Kolben geschehen, die nach ihrer Positionierung den Raum der Ausgleichskammer begrenzen. Diese Variante ist in der Zeichnung nicht dargestellt.

Der Pneumatikzylinder 1 für die Radfederung bzw. Schwingungsdämpfung bei gleichzeitiger Verstellmöglichkeit der Höhenlage durch Veränderung der Stellung des Kolbens im Zylinder weist eine erste Druckkammer 8 und eine zweite Druckkammer 9 auf. Die erste Druckkammer 8 ist sowohl mit dem ersten Ausgleichsbehälter 15 als auch mit dem Druckvorrat 17 verbunden. Dies kann mittels eines T-Stückes in der Druckleitung 18 am Ausgleichsbehälter 15 realisiert werden. Die zweite Druckkammer 9 ist ebenfalls über Druckleitungen 18 mit dem zweiten Ausgleichsbehälter 16 und dem Druckvorrat 17 verbunden. Über unterschiedliche Druckbeaufschlagungen der beiden Druckkammern 8 und 9 läßt sich eine Änderung der Stellung des Kolbens bewirken. Werden beide Druckkammern 8 und 9 mit Druck beaufschlagt, verändert sich die Feder- und/oder Dämpfungscharakteristik. Die Ausgleichsbehälter 15 und 16 und gegebenenfalls auch der Druckvorrat 17 wirken als Puffer und beeinflussen die Feder- und Dämpfungscharakteristik des Pneumatikzylinders 1.

In der Fig. 4 ist eine Ausführungsform des erfindungsgemäßen Ausgleichsbehälters gezeigt, die gleichzeitig eine Radlageanordnung, zum Beispiel ein pneumatisches Schwingungsdämpfersystem, darstellt, wobei hier lediglich zwei Schwingungsdämpfer, beispielsweise einer Achse, dargestellt sind. Das gesamte System ist selbstverständlich auf zwei oder mehrere Achsen, beispielsweise bei Nutzkraftfahrzeugen oder Personenkraftwagen, ausdehnbar.

Die Fig. 4 zeigt dabei eine Ausführungform mit zwei Pneumatikzylindern. Die Pneumatikzylinder 1 sind dabei wieder in erste und zweite Druckkammern 8 und 9 unterteilt. Bei der Ausführungsform gemäß der Fig. 4 wird lediglich jeweils die erste Druckkammer 8 des Pneumatikzylinders 1 mit Druck beaufschlagt. Die ersten Druckkammern 8 sind dabei jeweils mit den Ausgleichskammern 15 bzw. 16 verbunden. Über eine Dreiwegeleitung ist die jeweilige Ausgleichskammer 15, 16 mit dem Druckvorrat 17 bzw. dem Kompressor des Druckversorgungssystems direkt verbunden. Ventile, Rückschlagklappen, erforderliche Elektronik usw. sind hier nicht dargestellt, da sie für die Erfindung nicht wesentlich sind. Selbstverständlich ist es möglich, die Regelsysteme, welche für die Regelung des Drucksystems notwendig sind, in Form von Ventilen, Reglern, Steuerungen usw. vorzusehen. Die Ausführungsform nach der Fig. 4 zeichnet sich dadurch aus, daß in den zweiten Druckkammern 9 der Pneumatikzylinder 1 ein festes Luftvolumen vorhanden ist. Je nach Beaufschlagung mit Druck der Druckkammern 8 wird dabei die in der zweiten Druckkammer 9 vorhandene Luft entweder komprimiert bzw. ausgedehnt. Somit läßt sich die Stellung des Kolbens in dem Pneumatikzylinder 1 verändern und gleichzeitig lassen sich dadurch die Federeigenschaften des Fahrzeuges verändern. Mit diesem System ist es demnach möglich, sowohl die Höhenlage der Achsen eines Fahrzeuges zu beeinflussen als auch die Dämpfungseigenschaften.

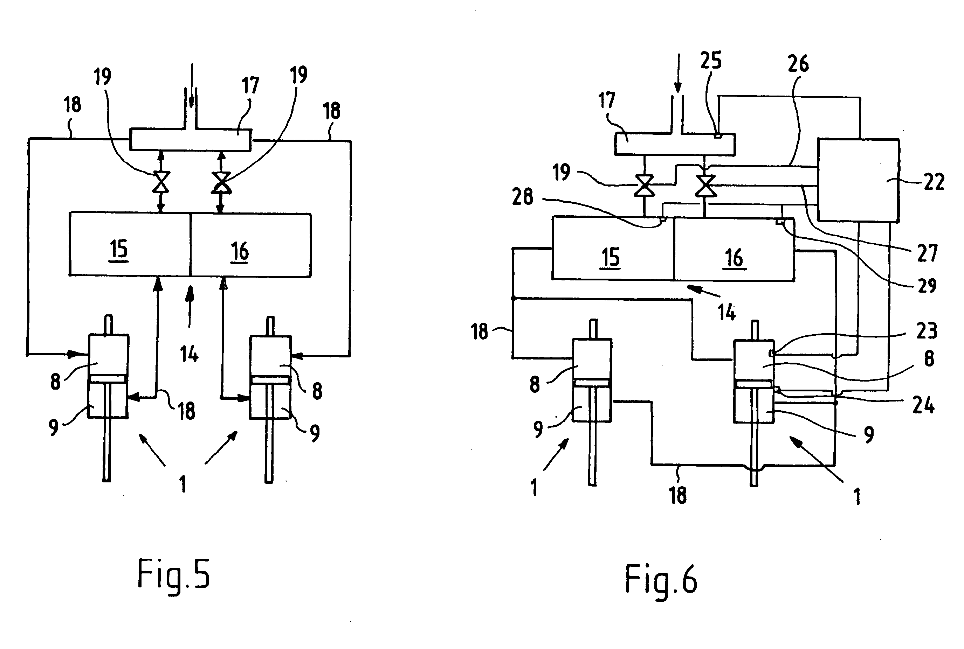

Die Fig. 5 zeigt eine weitere Ausführungsform nach der Erfindung mit weiteren Verkettungsmöglichkeiten der Druckkammern 8 und 9 mit dem Ausgleichsbehälter 14. Die Fig. 5 zeigt, daß beispielsweise die Druckkammer 8 des jeweiligen Pneumatikzylinders über eine Druckleitung 18 mit dem Druckvorrat 17 direkt verbunden ist. Die zweite Druckkammer 9 ist über eine weitere Druckleitung 18 dann mit der erste Ausgleichskammer 15 verbunden. Die erste Ausgleichskammer 15 besitzt in dieser Ausführungsform keine direkte Verbindung zu dem Druckvorrat 17. Somit wirkt die vorhandene Luft in der erste Ausgleichskammer 15 als Puffer und Dämpfungselement für die zweite Druckkammer 9 des linken Pneumatikzylinders 1.

Auf der rechten Seite der Darstellung der Fig. 5 ist ein weiterer Pneumatikzylinder 1 angeordnet. Auch bei diesem ist die erste Druckkammer 8 über die Druckleitung 18 mit dem Druckvorrat 17 direkt verbunden. Die zweite Druckkammer 9 ist über eine weitere Druckleitung 18 mit der zweiten Ausgleichskammer 16 verbunden. Auch die zweite Ausgleichskammer 16 hat keine direkte Verbindung zu dem Druckvorrat 17 bzw. zu dem Drucksystem insgesamt, so daß auch die zweite Ausgleichskammer 16 als Puffer und Dämpfungselement für die Druckkammer 9 wirkt.

Dies setzt voraus, daß die optional vorgesehenen Verbindungen der Ausgleichskammern 15 und 16 mit dem Druckvorrat 17 durch Ventile 19 abgesperrt sind. Öffnet man die Ventile 19, ergibt sich eine Druckerhöhung bzw. ein Druckausgleich, was wiederum zur Beeinflussung der Höhenlage und/oder der Dämpfungs- bzw. Federcharakteristik genutzt werden kann.

Die Fig. 6 zeigt weitere Verbindungsmöglichkeiten der Zylinder 1 mit dem Druckausgleichsbehälter 14. In dieser Ausführungsform ist zwischen den Ausgleichskammern 15 und 16 jeweils eine zusätzliche Druck- bzw. Verbindungsleitung zu dem Vorratsbehälter bzw. dem Kompressor vorgesehen, welche mittels Ventilen 19 verschließbar sind. Über diese Druckleitung und über die Ventile 19 lassen sich die Druckeigenschaften bzw. Dämpfungseigenschaften durch den Ausgleichsbehälter weiterhin beeinflussen. Die Ausgleichskammer 15 ist in der Ausführungsform nach der Fig. 6 mit beiden ersten Druckkammern 8 der Pneumatikzylinder 1 verbunden. Dabei sind beide Zylinder parallel und nicht in Reihe geschaltet. Ebenfalls parallel zu der Ausgleichskammer 16 sind die zweiten Druckkammern 9 der Pneumatikzylinder 1 geschaltet. Durch diese weitere Ausführungsform der Erfindung lassen sich ebenfalls sehr günstige Verstellmöglichkeiten und Dämpfungseigenschaften herstellen.

Mit dem Bezugszeichen 22 ist das Regelsystem dargestellt. Es kann sich dabei beispielsweise um ein kombiniertes Druck- und Wegmeßsystem handeln, über welches der Druck bzw. die Drücke im System einstellbar und regelbar sind. Die Bezugszeichen 23, 25, 28 und 29 bezeichnen dabei schematisch Drucksensoren, die mit dem Regelsystem 22 verbunden sind. Mit dem Bezugszeichen 24 ist ein Wegsensor bezeichnet, der die Stellung und/oder den Weg des Kolbens oder der Kolbenstange mißt und dies ebenfalls über entsprechende Verbindungsleitungen dem Regelsystem 22 meldet.

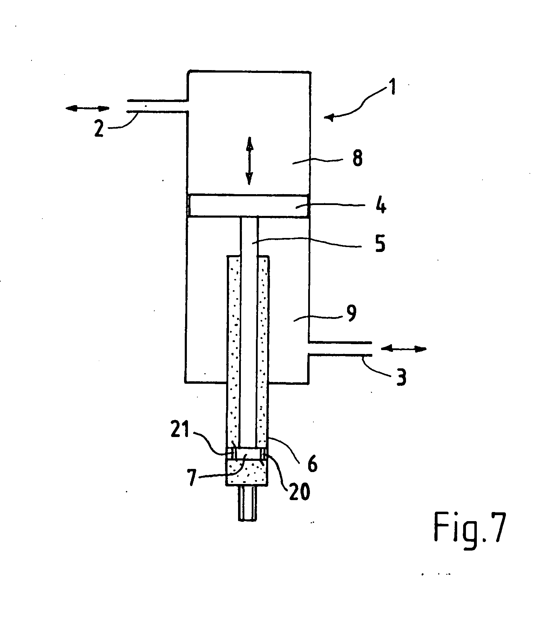

Die Fig. 7 zeigt einen Luftfederdämpfer, der als hydro-pneumatischer Luftfederdämpfer ausgeführt ist. Bei dieser Ausführungsform ist zumindest ein Teil des als Schwingungsdämpfer ausgebildeten Hydraulikzylinders 6 in der zweiten Druckkammer 9 des Pneumatikzylinders 1 angeordnet. Der Kolben 4 ist über die Kolbenstange 5, welche gleichzeitig als Kolben 7 für den hydraulischen Schwingungsdämpfer ausgeführt ist, verbunden. Die erste Druckkammer 8 befindet sich oberhalb des Kolbens 4 und ist über die Luftdurchlaßöffnung 2 mit Druck unterschiedlich beaufschlagbar. In gleicher Weise gilt dies für die zweite Druckkammer 9, welche über die Druckdurchlaßöffnung 3 mit Druck beaufschlagbar ist. Dabei ist ein derartiger hydro-pneumatischer Schwingungsdämpfer sehr gut in der erfindungsgemäßen Radlageanordnung mit einem Ausgleichsbehälter 14, wie zuvor beschrieben, einsetzbar. Mit den Bezugszeichen 20 und 21 sind Durchlaßöffnungen mit Verschlußklappen angedeutet, über die die hydraulische Dämpfung beeinflußbar ist. Selbstverständlich ist dieser hydropneumatische Schwingungsdämpfer gleichzeitig auch als Ersatz für herkömmliche hydro-mechanische Schwingungsdämpfer einsetzbar.

## Patentansprüche

1. Radlageanordnung für Fahrzeuge, bestehend aus einem doppelwirkendem Pneumatikzylinder (1), welcher zwischen Rad und Fahrzeugaufbau anordenbar ist und der Pneumatikzylinder einen an einer Kolbenstange (5) geführten, bewegbaren Kolben (4) besitzt, welcher das Zylindervolumen in zwei Druckkammern (8, 9) unterteilt und zumindest eine Druckkammer (8,9) eine Luftdurchlaßöffnung (2, 3) aufweist, durch die die Druckkammer mit einem Ausgleichsbehälter (14) und/oder Druckvorrat (17) verbindbar ist **dadurch gekennzeichnet, daß** die Anordnung so ausgelegt ist, daß die Höhenverstellung durch Veränderung des Druckes zumindest in einer der Druckkammern (8, 9) erfolgt.

2. Radlageanordnung nach Anspruch 1, **dadurch gekennzeichnet, daß** die Radlageanordnung zur Federung des Fahrzeuges dient und/oder die Verbindungsleitung (18) zwischen der Druckkammer (8, 9) und dem Ausgleichsbehälter (14) als Drossel wirkt.

3. Radlageanordnung nach einem oder beiden der vorhergehenden Ansprüche, **dadurch gekennzeichnet, daß** als Druckmedium Gas, insbesondere Luft, Stickstoff, Kohlendioxyd, Edelgas, vorzugsweise Helium, vorgesehen ist.

4. Radlageanordnung nach einem oder mehreren der vorhergehenden Ansprüche, **dadurch gekennzeichnet, daß** zumindest eine der Druckkammern (8,9) direkt mit dem Druckvorrat (17) verbunden ist und/oder zumindest eine der Druckkammern (8,9) über jeweils getrennte Leitungen (18) oder über eine zumindest abschnittsweise gemeinsame Leitung mit dem Ausgleichsbehälter (14) und dem Druckvorrat (17) verbunden ist und/oder eine Feder (11) vorgesehen ist, die die Federung des Pneumatikzylinders (1) unterstützt.

5. Radlageanordnung nach einem oder mehreren der vorhergehenden Ansprüche, **dadurch gekennzeichnet, daß** ein Ausgleichsbehälter (14) für mehrere Druckkammern (8,9), insbesondere für gleichartig in dem Pneumatikzylinder (1) angeordnete Druckkammern (8,9), vorgesehen ist oder jeder Druckkammer (8,9) ein eigener Ausgleichsbehälter (14) zugeorndet ist, wobei vorzugsweise mehrere Ausgleichsbehälter (14) untereinander durch Leitungen verbindbar sind.

6. Radlageanordnung nach einem oder mehreren der vorhergehenden Ansprüche, **dadurch gekennzeichnet, daß** der Ausgleichsbehälter (14) mit einem Druckvorrat (17) verbunden ist und eine Drucksteuerung (22) vorgesehen ist, mittels der die Federcharakteristik der Radlageanordnung einstellbar ist.

7. Radlageanordnung nach einem oder mehreren der vorhergehenden Ansprüche, **dadurch gekennzeichnet, daß** der Ausgleichsbehälter (14) mehrere Ausgleichskammern (15, 16) aufweist und die Ausgleichskammern (15, 16) derart ausgebildet sind, daß das Volumen der beiden Ausgleichskammern (15, 16) veränderbar ist.

8. Radlageanordnung nach einem oder mehreren der vorhergehenden Ansprüche, **dadurch gekennzeichnet, daß** die Radlageanordnung als pneumatische Höhenverstellung dient, indem die Höhenverstellung durch unterschiedliche Stellung des Kolbens (4) im Pneumatikzylinder (1) bewirkt wird.

9. Radlageanordnung nach einem oder mehreren der vorhergehenden Ansprüche, **dadurch gekennzeichnet, daß** der Pneumatikzylinder (1) derart ausgebildet ist, daß er an einen hydraulisch-mechanischen Schwingungsdämpfer anschließbar, insbesondere auf diesen aufsetzbar, ausgebildet ist und/oder unter dem Pneumatikzylinder (1) eine Aufnahme (13) vorgesehen ist, die vorzugsweise den Hydraulikzylinder (6) trägt.

10. Radlageanordnung nach einem oder mehreren der vorhergehenden Ansprüche, **dadurch gekennzeichnet, daß** die Kolbenstange (5) den Kolben (4) mit einem weiteren Kolben (7) verbindet, der in einem als Schwingungsdämpfer ausgebildeten Hydraulikzylinder (6) angeordnet ist oder der Kolben (4) des Pneumatikzylinders (1) mit dem Gehäuse des Hydraulikzylinders (6) verbunden ist und/oder zumindest ein Teil des Hydraulikzylinders (6) im Volumen einer der Druckkammern (8, 9) angeordnet ist und die Kolbenstange (5) vorzugsweise gleichzeitig den Kolben (7) für den Hydraulikzylinder (6) des Schwingungsdämpfers bildet bzw. diesen trägt.

11. Radlageanordnung nach einem oder mehreren der vorhergehenden Ansprüche, **dadurch gekennzeichnet, daß** als Druckvorrat (17) ein Windkessel und/oder ein Kompressor vorgesehen ist, wobei vorzugsweise ein bereits am Fahrzeug vorhandener Bordkompressor eingesetzt wird.

12. Radlageanordnung nach einem oder mehreren der vorhergehenden Ansprüche, **dadurch gekennzeichnet, daß** an den Luftdurchlaßöffnungen (2, 3) oder den Leitungen (18) Ventile (19) vorgesehen sind, die die Luftzufuhr bzw. den Luftablaß regeln.

13. Fahrzeug, wobei zumindest die Räder bei einer Achse des Fahrzeugs mit einer Radlageanordnung nach einem oder mehreren der vorhergehenden Ansprüche ausgestattet sind und ein Regelsystem vorgesehen ist, das den Druck und/oder die Federeigenschaften des Pneumatikzylinders regelt.

14. Fahrzeug nach Anspruch 13, **dadurch gekennzeichnet, daß** am Fahrzeugaufbau eine Aufnahmeplatte (10) vorgesehen ist, die mit dem Pneumatikzylinder (1) zusammenwirkt.

## Claims

1. Arrangement for the wheel position for vehicles, comprising a double acting pneumatic cylinder (1) which can be arranged between wheel and vehicle construction, and the pneumatic cylinder has a movable piston (4) guided on a piston rod (5), the piston dividing the volume of the cylinder in two pressure chambers (8, 9), and at least one pressure chamber (8, 9) has an air admission port (2, 3) through which the pressure chamber can be connected to a compensator reservoir (14) and/or pressure reserves (17), **characterised in that** the arrangement is designed in such a way that the height adjustment is carried out by altering the pressure in at least one of the pressure chambers (8, 9).

2. Arrangement for the wheel position according to claim 1,
**characterised in that** the arrangement for the wheel position serves for the resilience of the vehicle, and/or the connecting line (18) between the pressure chamber (8, 9) and the compensator reservoir (14) acts as choke.

3. Arrangement for the wheel position according to one or both of the preceding claims, **characterised in that** as pressure medium gas, in particular air, nitrogen, carbon dioxide, inert gas, preferably helium, is provided.

4. Arrangement for the wheel position according to one or more of the preceding claims, **characterised in that** at least one of the pressure chambers (8, 9) is connected directly to the pressure reserves (17), and/or one of the pressure chambers (8, 9) is connected via respective separate lines (18) or via an at least in sections common line to the compensator reservoir (14) and the pressure reserves (17), and/or a spring (11) is provided which supports the resilience of the pneumatic cylinder (1).

5. Arrangement for the wheel position according to one or more of the preceding claims, **characterised in that** a compensator reservoir (14) is provided for several pressure chambers (8, 9), in particular for pressure chambers (8, 9) arranged identically in the pneumatic cylinder (1), or each pressure chamber (8, 9) has its own assigned compensator reservoir (14), preferably several compensator reservoirs (14) being connectable to one another by lines.

6. Arrangement for the wheel position according to one or more of the preceding claims, **characterised in that** the compensator reservoir (14) is connected to pressure reserves (17), and a pressure control (22) is provided by means of which the resilience characteristic line of the arrangement for the wheel position can be adjusted.

7. Arrangement for the wheel position according to one or more of the preceding claims, **characterised in that** the compensator reservoir (14) has several compensator chambers (15, 16), and the compensator chambers (15, 16) are designed in such a way that the volume of the two compensator chambers (15, 16) can change.

8. Arrangement for the wheel position according to one or more of the preceding claims, **characterised in that** the arrangement for the wheel position serves as pneumatic height adjustment by effecting the height adjustment through different positions of the piston (4) in the pneumatic cylinder (1).

9. Arrangement for the wheel position according to one or more of the preceding claims, **characterised in that** the pneumatic cylinder (1) is designed in such a way that it can be connected to, in particular put on, a hydraulic mechanic vibration absorber, and/or beneath the hydraulic cylinder (1) a seat (13) is provided which preferably carries the hydraulic cylinder (6).

10. Arrangement for the wheel position according to one or more of the preceding claims, **characterised in that** the piston rod (5) connects the piston (4) to another piston (7) arranged in a hydraulic cylinder (6) designed as vibration absorber, or the piston (4) of the pneumatic cylinder (1) is connected to the housing of the hydraulic cylinder (6), and/or at least a part of the hydraulic cylinder (6) is arranged in the volume of one of the pressure chambers (8,9), and the piston rod (5) forms or carries, respectively, preferably simultaneously the piston (7) for the hydraulic cylinder (6) of the vibration absorber.

11. Arrangement for the wheel position according to one or more of the preceding claims, **characterised in that** as pressure reserves (17) an air vessel and/or an on-board-compressor is provided, and preferably an on board-compressor is used which is already provided in the vehicle.

12. Arrangement for the wheel position according to one or more of the preceding claims, **characterised in that** in the air admission ports (2, 3) or the lines (18) valves (19) are provided which control the inlet or outlet of air.

13. Vehicle, wherein at least the wheels of one axle of the vehicle are equipped with an arrangement for the wheel position according to one or more of the preceding claims, and a control system is provided which controls the pressure and/or the characteristic line of resilience of the pneumatic cylinder.

14. Vehicle according to claim 13, **characterised in that** on the vehicle construction a receiver board (10) is provided which interacts with the pneumatic cylinder (1).

## Revendications

1. Système de suspension de roues de véhicules consistant en un vérin pneumatique (1) à effet double, pouvant être situé entre la roue et le châssis du véhicule et comportant un piston mobile (4) qui, guidé au niveau de la tige du piston (5), sépare le volume du cylindre en deux chambres (8, 9) dont au moins une possède une ouverture (2, 3) laissant passer de l'air et permettant de relier la chambre sous pression à un récipient d'équilibrage (14) et/ou à un récipient sous pression (17), **caractérisé en ce que** le système de suspension est configuré de fagon à ce que l'ajustement de la hauteur est obtenu en modifiant la pression d'au moins une des chambres sous pression (8, 9).

2. Système de suspension de roues selon la revendication 1,
**caractérisé en ce que** le système de suspension de roues sert à amortir le véhicule et/ou **en ce que** la connexion (18) entre la chambre (8, 9) et le récipient d'équilibrage (14) sert comme élément d'amortissement.

3. Système de suspension de roues selon l'une ou selon les deux revendications précédentes, **caractérisé en ce que** le gaz mis sous pression peut être par exemple de l'air, de l'azote, du dioxyde de carbone ou un gaz rare, voire de préférence de l'hélium.

4. Système de suspension de roues selon une ou plusieurs des revendications précédentes, **caractérisé en ce qu'**au moins une des chambres (8, 9) est directement reliée au récipient sous pression (17) et/ou **en ce qu'**au moins une chambre (8, 9) est connectée au récipient d'équilibrage (14) et au récipient sous pression (17) par des conduites séparées (18) ou partiellement communes et/ou **en ce qu'**il existe un ressort (11) soutenant le mouvement élastique du vérin pneumatique (1).

5. Système de suspension de roues selon une ou plusieurs des revendications précédentes, **caractérisé en ce qu'**il existe un récipient d'équilibrage (14) destiné à plusieurs chambres, en particulier à des chambres similaires (8, 9) situées à l'intérieur du vérin pneumatique (1) ou **en ce qu'**un récipient d'équilibrage (14) existe pour chacune des chambres (8, 9), sachant que plusieurs récipients d'équilibrage (14) pourraient, de préférence, être interconnectés.

6. Système de suspension de roues selon une ou plusieurs des revendications précédentes, **caractérisé en ce que** le récipient d'équilibrage (14) est relié au récipient sous pression (17) et **en ce qu'**il existe un système de contrtle (22) permettant d'ajuster les caractéristiques du mouvement élastique du système de suspension de roues.

7. Système de suspension de roues selon une ou plusieurs des revendications précédentes, **caractérisé en ce que** le récipient d'équilibrage (14) possède plusieurs éléments d'équilibrage (15, 16) dont la configuration permet de modifier leurs volumes.

8. Système de suspension de roues selon une ou plusieurs des revendications précédentes, **caractérisé en ce que** le système de suspension de roues sert comme moyen pneumatique d'ajustement de la hauteur, celle-ci étant directement liée à la position du piston (4) à l'intérieur du vérin pneumatique (1).

9. Système de suspension de roues selon une ou plusieurs des revendications précédentes, **caractérisé en ce que** le vérin pneumatique (1) possède une configuration telle qu'il peut être directement connecté, voire superposé, à un amortisseur d'oscillations hydraulique et mécanique à et/ou **en ce qu'**il existe un support (13) sous le vérin pneumatique (1) supportant de préférence le vérin hydraulique (6).

10. Système de suspension de roues selon une ou plusieurs des revendications précédentes, **caractérisé en ce que** la tige du piston (5) relie le piston (4) à un piston supplémentaire (7) situé à l'intérieur d'un vérin hydraulique (6) configuré comme amortisseur d'oscillations ou **en ce que** le piston (4) du vérin pneumatique (1) est relié au châssis du vérin hydraulique (6) et/ou **en ce qu'**au moins une partie du vérin hydraulique (6) est située à l'intérieur d'une des chambres (8, 9), la tige du piston (5) constituant ou supportant, de préférence simultanément, le piston (7) du vérin hydraulique (6) de l'amortisseur d'oscillations.

11. Système de suspension de roues selon une ou plusieurs des revendications précédentes, **caractérisé en ce que** le récipient sous pression (17) est un ballon sous pression et/ou un compresseur qui, de préférence, est celui du véhicule.

12. Système de suspension de roues selon une ou plusieurs des revendications précédentes, **caractérisé en ce que** des vannes (19), régulant l'arrivée ou la sortie d'air, sont prévues au niveau des ouvertures (2, 3) permettant de laisser passer de l'air, ou au niveau des conduites (18).

13. Véhicule ayant au moins un axe de rotation dont les roues sont équipées d'un système de suspension de roues selon une ou plusieurs des revendications précédentes comportant un système de réglage destiné à l'ajustement de la pression et/ou des propriétés élastiques du vérin pneumatique.

14. Véhicule selon la revendication 13, **caractérisé en ce que** le châssis du véhicule comporte une plaque de support (10) interagissant avec le vérin pneumatique (1).
